(19) Europäisches Patentamt
European Patent Office
Office européen des brevets

(11) **EP 1 540 377 B1**

(12) **FASCICULE DE BREVET EUROPEEN**

(45) Date de publication et mention de la délivrance du brevet:
**12.10.2011 Bulletin 2011/41**

(21) Numéro de dépôt: **03758244.2**

(22) Date de dépôt: **18.08.2003**

(51) Int Cl.:
**G01V 1/28** (2006.01)

(86) Numéro de dépôt international:
**PCT/FR2003/002543**

(87) Numéro de publication internationale:
**WO 2004/025327 (25.03.2004 Gazette 2004/13)**

(54) **METHODE POUR COMPACTER ET FILTRER DES EVENEMENTS GEOPHYSIQUES DANS LE BUT D EN EXTRAIRE DES INFORMATIONS SUR LA NATURE DU SOU S-SOL**

VERFAHREN ZUM KOMPRIMIEREN UND FILTRIEREN VON GEOPHYSISCHEN EREIGNISSEN ZWECKS EXTRAHIERUNG VON BODENARTDATEN

METHOD FOR PACKING AND FILTERING GEOPHYSICAL EVENTS TO RETRIEVE THEREFROM DATA ON THE TYPE OF SUBSOIL

(84) Etats contractants désignés:
**BE CH DE GB IT LI NL**

(30) Priorité: **10.09.2002 FR 0211200**
**17.02.2003 FR 0301900**

(43) Date de publication de la demande:
**15.06.2005 Bulletin 2005/24**

(73) Titulaire: **IFP Energies nouvelles**
**92852 Rueil-Malmaison Cedex (FR)**

(72) Inventeurs:
• **VOUTAY, Olivier**
  **F-92320 Chatillon (FR)**
• **FOURNIER, Frédérique**
  **F-95240 Cormeilles-en-Parisis (FR)**
• **ROYER, Jean-Jacques**
  **F-54000 Nancy (FR)**

(56) Documents cités:
**US-A- 4 937 747     US-A- 6 052 651**

• **HUANG K-Y: "NEURAL NETWORKS FOR SEISMIC PRINCIPAL COMPONENTS ANALYSIS" IEEE TRANSACTIONS ON GEOSCIENCE AND REMOTE SENSING, IEEE INC. NEW YORK, US, vol. 37, no. 1, PART 1, janvier 1999 (1999-01), pages 297-311, XP000829042 ISSN: 0196-2892**

## Description

La présente invention concerne une méthode pour compacter et filtrer des données géophysiques dans le but d'en extraire au mieux des informations sur la nature du sous-sol.

Cette méthodologie s'applique à la compaction et au filtrage des jeux de données géophysiques multidomaines, i.e. soit des données sismiques avant sommation issues d'une campagne sismique 3D regroupées en un certain nombre de cubes de données correspondant chacun par exemple à un même déport (cubes de traces sismiques dits iso-offsets) ou à un même angle d'incidence (dits cubes iso-angles d'incidence), ou à des cubes d'attributs sismiques obtenus par traitement des amplitudes sismiques comme, par exemple, des cubes de propriétés élastiques issus d'une inversion stratigraphique jointe de données sismiques avant sommation, ces cubes étant obtenus par la mise en oeuvre de la méthode décrite par exemple dans le brevet FR 2 800 473 (EP 1 096 270) du demandeur. Il s'agit alors de mettre en forme l'information sismique avant sommation contenue dans des portions de traces sismiques formées par exploration d'une zone souterraine, à l'aide de nouveaux attributs représentatifs qui sont ensuite exploités pour l'interprétation géologique ou l'interprétation d'un réservoir du sous-sol. Elle peut aussi s'appliquer à la compaction et au filtrage de données sismiques 3D avant ou après sommation de campagnes répétées dans le temps (sismique 4D), ceci afin d'interpréter les variations de contenu en fluides d'un réservoir pétrolier en cours de production. Cette méthode peut aussi s'appliquer à la compaction de données diagraphiques de plusieurs natures physiques, en formant à partir des mesures de départ de nouveaux attributs diagraphiques, et ce afin d'améliorer l'interprétation des données diagraphiques en termes de caractéristiques lithologiques et pétrophysiques du réservoir.

## Etat de la technique

Les mesures géophysiques sont classiquement utilisées pour fournir des informations complémentaires, par rapport aux observations directes dans les puits, sur les.variations des propriétés géologiques des formations du sous-sol. L'interprétation sismique, par exemple, est basée sur l'analyse d'attributs afin d'extraire ces propriétés géologiques à partir de l'information sismique, et ce dans une zone d'intérêt d'une formation souterraine (zone réservoir par exemple). Un autre exemple est l'interprétation diagraphique où les diverses mesures sont analysées simultanément pour en déduire les caractéristiques pétrophysiques de la formation souterraine étudiée.

Une approche standard pour l'analyse d'attributs sismiques ou diagraphiques implique l'utilisation de méthodes statistiques de reconnaissance de forme et d'estimation afin de calibrer les attributs pertinents avec l'information disponible obtenue au droit de différents puits forés.

Par exemple, par le brevet FR -A 2 768 818 (US 6 051 651 du demandeur, on connaît une méthode permettant de détecter les classe potentielles dans une population d'événements liés aux propriétés physiques d'un milieu complexe tel que le sous-sol, repérés à partir de données obtenues par exploration du sous-sol ou par des mesures in situ, (événements d'ordre géologique, géophysique, événements liés à des données de production de fluides etc.), ces événements étant repérés par des points dans un espace multivariable et définis par un vecteur d'attributs.

Un autre exemple est donné par le brevet FR 01/05.675 du demandeur, qui décrit une méthode pour faciliter le suivi au cours du temps de l'évolution d'une zone souterraine par analyse comparée d'un certain nombre n de jeux d'enregistrements sismiques obtenus successivement à l'issue de n campagnes sismiques 3D successives (sismique dite 4D), dans laquelle on utilise une technique de reconnaissance des formes appliquée à l'ensemble des événements sismiques de plusieurs campagnes, considérés et analysés simultanément.

Citons aussi le brevet EP -A-671 017 (US 5 638 269) du demandeur, qui décrit une méthode permettant de rapprocher des données géologiques obtenues par carottage ou diagraphies dans des puits et des données sismiques obtenues par une campagne d'exploration sismique qui s'appuie sur une technique de calibrage statistique avec un étalonnage statistique obtenu en rapprochant les données géologiques locales (mesurées dans des puits) avec des attributs sismiques lus sur des traces sismiques obtenues au voisinage immédiat de chaque puits.

Les attributs sismiques qui font l'objet de ce type d'interprétation sont calculés dans le domaine après sommation, ou dans le domaine avant sommation.

Dans le domaine après sommation, les attributs classiques sont calculés à partir des amplitudes au niveau du réservoir, ou à partir de l'impédance P estimée à l'aide d'une inversion stratigraphique.

Dans le domaine avant sommation, le nombre d'attributs pertinents peut considérablement augmenter. Dans ce cas, les attributs sont soit les amplitudes à différents offsets (déports) ou angles d'incidence, soit des paramètres issus d'une inversion stratigraphique jointe avant sommation (Impédances P et S, masse spécifique, produit des paramètres de Lamé avec la masse spécifique, etc.).

En ce qui concerne l'interprétation des mesures diagraphiques, la situation est analogue, un très grand nombre de mesures étant disponibles d'où en découlent un grand nombre d'attributs permettant de caractériser les diagraphies, ces attributs étant souvent organisés en familles à même signification physique (par exemple, famille des attributs de résistivité, famille des attributs associés à la radioactivité naturelle ou induite des formations, etc.).

## EP 1 540 377 B1

Une méthode dite d'analyse en composantes principales (ACP) bien connue des gens de l'art, peut être appliquée à ces attributs afin d'analyser les relations existantes entre eux et de réduire le nombre d'attributs significatifs. Les composantes principales extraites de l'ACP sont les nouveaux attributs : ils définissent une base vectorielle orthogonale ou non (rotation) et sont des combinaisons linéaires de variables initiales. Ils peuvent être utilisées dans des algorithmes statistiques de reconnaissance de forme et correspondent à un filtrage multivarié de l'information sismique ou diagraphique initiale. Différentes applications de l'ACP sont décrites, par exemple, dans :

- Dumay, J., Fournier, F., 1988, "Multivariate statistical analyses applied to seismic facies recognition", Geophysics, 53, 1151-1159 ;

- Hagen, D., C., 1982, "The application of principal components analysis to seismic data sets" : Geoexpl., 20, 93-111 ; ou encore

- dans le brevet FR-A- 2 772 138 (US 6 345 108) du demandeur.

Mais l'ACP ne prend pas en compte la notion de groupe d'attributs et, par conséquent, il est souvent difficile de donner une interprétation physique aux composantes principales, ou bien de les relier clairement aux attributs initiaux, surtout si ceux-ci sont organisés en groupes de même signification physique.

L'analyse dite canonique est aussi une méthode statistique bien connue des gens de l'art, qui permet d'établir les relations pouvant exister entre deux groupes de variables afin de savoir si ces deux groupes décrivent les mêmes propriétés. Cette méthode est décrite par exemple par :

- Hotelling, H., 1936, "Relations between two sets of variables", Biometrika, 28, 321-377.

Un exemple d'application de l'analyse canonique est décrite par exemple par :

- Fournier, F., and Derain, J.F., 1995, "A statistical methodology for deriving reservoir properties from seismic data", Geophysics, 60, 1437-1450.

Cette méthode se limite à l'étude de deux groupes de variables et donc ne s'applique pas de façon générale à l'information sismique multicubes ou à l'information diagraphique multidomaines. De plus, elle définit des variables synthétiques dans chacun des sous-espaces associés aux deux groupes, et non une seule base vectorielle permettant de compacter l'ensemble des variables initiales et de décrire les relations entre les deux groupes.

Plusieurs méthodes permettant de généraliser l'analyse dite canonique en étendant l'analyse à plus de deux groupes de variables existent. Différents aspects de l'art antérieur dans le domaine considéré sont décrits, par exemple, dans les publications suivantes :

- Horst, P., 1961, "Relations among m sets of measures", Psychometrika, 26, n°2, 129-149 ;

- Caroll, J.D., 1968, "A généralisation of canonical correlation analysis to three or more sets of variables", Proc. 76th Conv. Amer. Psych. Ass ;

- Kettenring, J.R., .1971, "Canonical analysis of several sets of variables", 58, 3, 433-450 ; ou

- Saporta, G., 1990, "Probabilités, analyse des données et statistiques", Technip, Paris.

Ces méthodes présentent certaines limites. En particulier, elles ne permettent pas de décrire chaque groupe séparément, les variables synthétiques ne peuvent être reliées facilement aux différents groupes, et , par conséquent, être physiquement interprétées. De plus, seule la part d'inertie globale qu'elles représentent peut être connue, et non la part d'inertie qu'elles représentent pour chaque groupe. Il n'est par conséquent pas possible de filtrer chaque groupe indépendamment.

Une technique d'analyse également connue dite analyse en composantes principales généralisée (ACPG), permet de comparer différents groupes de variables tout en décrivant chacun d'eux. On la trouve mise en oeuvre sur des données à caractère économique par exemple dans :

- Casin, Ph, 2001, "A generalization of principal component analysis to K sets of variables", Computational Statistics & Data Analysis, 35,417-428.

**La méthode selon l'invention**

La méthode selon l'invention propose une approche où en exploitant une technique statistique multivariable appliquée à plusieurs jeux d'enregistrements sismiques ou diagraphiques disponibles, obtenus par exploration d'une zone souterraine, on compacte et on filtre les événements géophysiques lisibles sur ces jeux de mesures. La méthode comporte :

- la répartition de ces événements géophysiques dans un certain nombre p de familles d'attributs géophysiques ayant chacune une signification physique particulière ;

- la formation par combinaison des dits attributs géophysiques, de variables synthétiques en nombre très inférieur au nombre des dits attributs, que l'on obtient par construction d'une base vectorielle orthogonale dans chacun des p ensembles d'analyse constitués par les données de chacune des dites familles, d'où découle la formation d'une base vectorielle orthonormée décrivant les p ensembles d'analyse ;

- l'utilisation de cette base vectorielle orthonormée pour filtrer et décrire les dits événements géophysiques.

La formation des variables synthétiques est obtenue par exemple en combinant une technique d'analyse en composantes principales ou ses techniques dérivées basées sur la diagonalisation d'une norme (recherche de vecteurs propres) et une technique de régression simple.

Suivant un mode de mise en oeuvre, on peut soumettre les variables synthétiques à une rotation pour améliorer les corrélations entre variables initiales, c'est à dire les attributs géophysiques, et variables synthétiques.

Les variables synthétiques peuvent être formées à partir de familles comportant par exemple un ou plusieurs cubes de traces sismiques obtenues à l'issue d'une campagne sismique 3D, chacun correspondant à un même déport ou offset.

On peut également former des variables synthétiques à partir de familles constituées de cubes de traces sismiques obtenus à l'issue d'une campagne sismique 3D, chacun correspondant à un même angle d'incidence.

On peut encore former des variables synthétiques à partir de familles constituées de cubes d'attributs sismiques formés par traitement des amplitudes de traces sismiques obtenues à l'issue d'une campagne sismique 3D.

On peut encore former des variables synthétiques à partir de familles constituées de cubes de traces sismiques obtenues à l'issue de campagnes sismiques successives de la zone.

On peut encore former des variables synthétiques à partir de familles constituées de cubes d'attributs sismiques formés par traitement des amplitudes de traces sismiques obtenues à l'issue de campagnes sismiques successives de la zone.

On peut encore former des variables synthétiques à partir de familles constituées de mesures d'attributs diagraphiques de nature physique différente, comme la famille des mesures de résistivité, la famille des mesures liées à la radioactivité des terrains, la famille des mesures liées à la porosité des terrains, etc.

La méthode est particulièrement avantageuse en ce qu'elle permet, appliquée à de l'information sismique ou diagraphique:

- de définir de nouveaux attributs géophysiques, combinaisons linéaires des attributs géophysiques initiaux, résumant l'information sismique ou diagraphique initiale et permettant de filtrer cette information, tout en respectant la structure multidomaines des données

- de montrer si toutes les familles d'attributs géophysiques initiaux, ou seulement certaines d'entre elles, apportent une information redondante, et de mesurer la part de cette information redondante

- d'apporter une interprétation physique aux nouveaux attributs géophysiques.

Les nouveaux attributs géophysiques ainsi formés peuvent ensuite être analysés afin d'extraire les propriétés géologiques de l'information sismique ou diagraphique. Deux classes de méthodes peuvent classiquement être utilisées à cette fin : une première qui utilise des techniques d'estimation statistique et fournit une interprétation quantitative en termes de propriétés géologiques, et une deuxième qui utilise des techniques de reconnaissance de forme pour analyser les faciès sismiques ou les faciès diagraphiques (électrofaciès) et fournir une interprétation qualitatitive.

Des exemples de ces deux types de méthode sont mis en oeuvre respectivement dans les brevets EP-A-671 017 (US 5 638 269) et FR-A-2 768 818 (US 6051651) du demandeur, déjà cités.

**Présentation succincte des figures**

- les figures 1A à 1C montrent l'organisation des enregistrements sismiques en p groupes : chaque groupe rassemble dans un cube l'ensemble des portions de traces correspondant à un critère physique identique ;

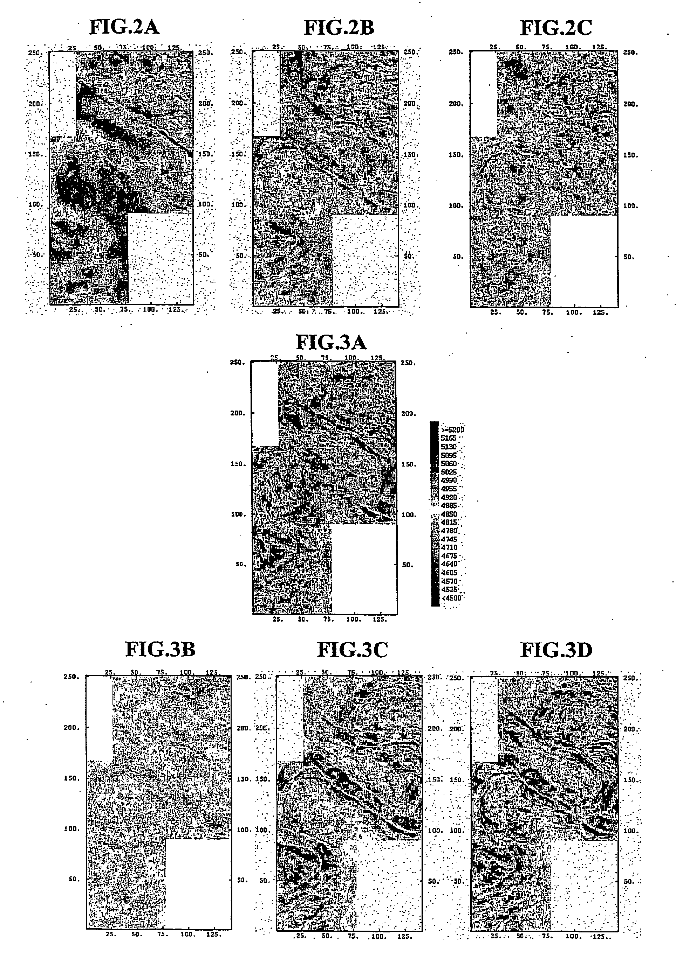

- les figures 2A à 2C montrent respectivement les cartes de trois premiers nouveaux attributs sismiques $Z^{(1)}$, $Z^{(2)}$ et $Z^{(3)}$ ;

- les figures 3A à 3D montrent respectivement le premier plan temporel vrai (3A) de la fenêtre d'analyse et le même plan reconstitué/filtré avec 1 (3B), 3 (3C)ou 8 (3D) des nouveaux attributs sismiques pour le cube d'impédance P ;

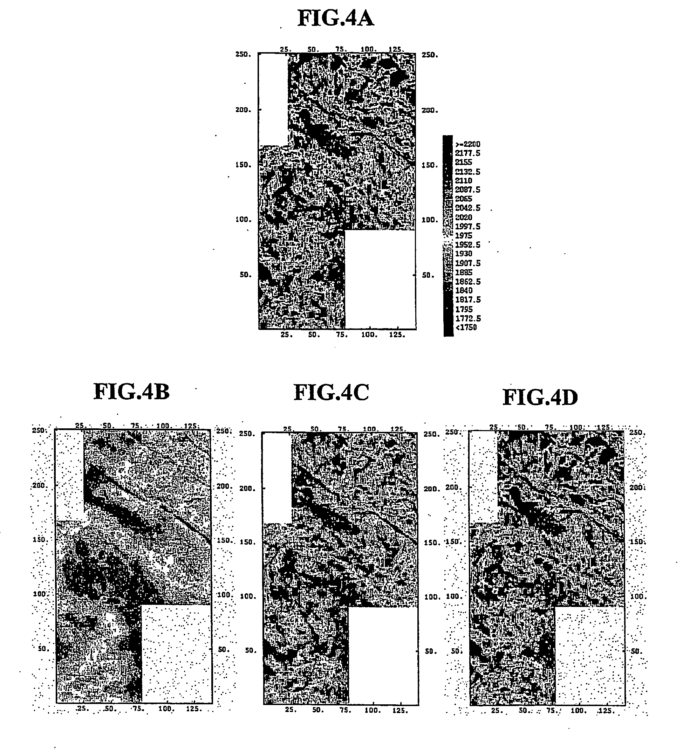

- les figures 4A à 4D montrent respectivement le premier plan temporel vrai (4A) de la fenêtre d'analyse et le même plan reconstitué/filtré avec 1 (4B), 3 (4C)ou 8 (4D) des nouveaux attributs sismiques pour le cube d'impédance S ;

- les figures 5A à 5D montrent respectivement le premier plan temporel vrai (5A) et le même plan reconstitué/filtré avec 1 (5B), 3 (5C)ou 8 (5D) des nouveaux attributs sismiques pour le cube de masse spécifique $\rho$ ;

- les figures 6 montrent respectivement les sections verticales, passant par le puits W2, vraie (6A), reconstituée/filtrée avec les 8 premiers nouveaux attributs (6B), ainsi que les différences (résidus) (6C) entre ces deux sections pour le cube d'impédance P ;

- les figures 7 montrent respectivement les sections verticales, passant par le puits W2, vraie (7A), reconstituée/filtrée avec les 8 premiers nouveaux attributs (7B), ainsi que les différences (résidus) (7C) entre ces deux sections pour le cube d'impédance S ;

- la figure 8 montre la localisation des traces d'apprentissage utilisées pour calibrer la fonction de classement dans le cadre de la reconnaissance des formes supervisée des 8 premiers nouveaux attributs sismiques ;

- les figures 9A, 9B montrent respectivement les attributions des événements sismiques et les attributions les plus fiables de ces mêmes événements dans le cadre de la reconnaissance des formes supervisée des 8 premiers nouveaux attributs sismiques ; et

- les figures 10A, 10B représentent respectivement les attributions des événements sismiques et les attributions de ces mêmes événements sismiques dans le cadre de la reconnaissance des formes non supervisée des 8 premiers nouveaux attributs sismiques.

**Description détaillée**

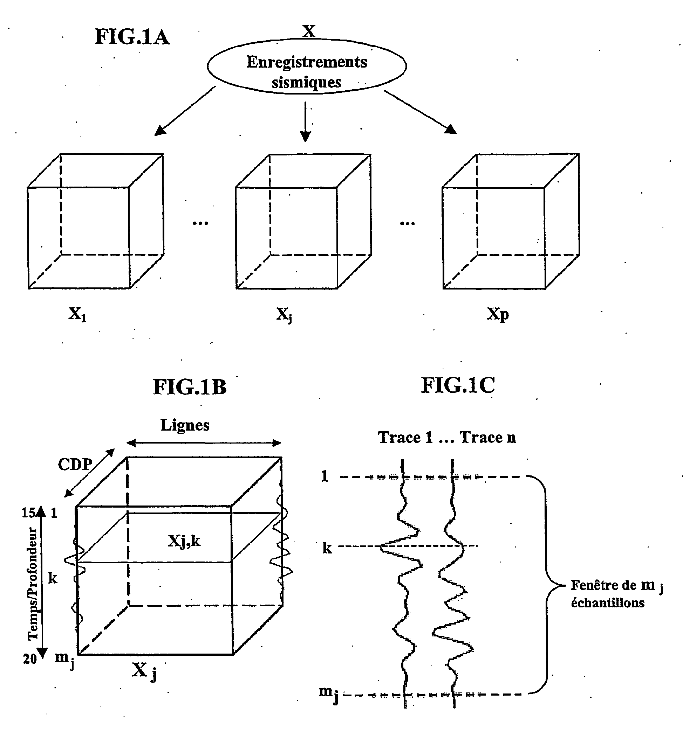

On dispose de plusieurs jeux d'enregistrements géophysiques obtenus par exploration sismique ou reconnaissance diagraphique d'une zone souterraine étudiée. Les événements géophysiques que l'on cherche à compacter/filtrer sont caractérisés par des attributs géophysiques souvent organisés en groupes ou familles à signification physique particulière (figures 1A à 1C). Ces attributs peuvent être la succession des valeurs des amplitudes de portions de traces sismiques ou de paramètres élastiques issus d'une inversion élastique jointe avant sommation, obtenue par exemple à l'aide de la méthode décrite dans le brevet FR 2 800 473 (EP 1 096 270)déjà cité le long de la fenêtre temporelle étudiée. Ces attributs peuvent être, pour une profondeur donnée, les mesures d'un même ensemble d'enregistrements diagraphiques réalisés le long d'un puits, comme par exemple les valeurs des différents outils de résistivité, les valeurs des différents outils mesurant la porosité, etc.

**1- Notations**

Soit X une matrice composée de p tableaux juxtaposés $X_1,... X_j ... X_p$ :

$$X = \{X_1 ... X_j ... X_p\} , \quad X_j = [X_{j,k} ... X_{j,k} ... X_{j,m_j}]$$

où $X_j$ est un tableau composé de $m_j$ variables $X_{j,k}$ de n individus (au sens statistique du terme). La matrice X rassemble tous les événements géophysiques disponibles. Ces événements sont tout d'abord organisés en p groupes ou familles $X_j$ (figure 1A). Chaque famille $X_j$ correspond à une propriété physique particulière. Pour l'analyse de la sismique 3D, cette famille se présente sous la forme d'un cube de valeurs correspondant à cette propriété, repérées par leur position spatiale (ligne, cdp, temps/profondeur), (figures 1B et 1C). Ces cubes peuvent être formés par exemple par un ensemble des valeurs d'amplitude de n traces ou portions de traces associées à un déport commun ou à un angle commun ou encore la distribution spatiale des valeurs d'un attribut commun dérivé de ces amplitudes telle que, par exemple, l'impédance acoustique en ondes P ou S, la masse spécifique ou des paramètres de Lamé, dans une fenêtre temporelle choisie de taille $m_j$. Dans cet exemple, chaque variable $X_{j,k}$ rassemble les valeurs de l'attribut sismique considéré (amplitude sismique ou propriété élastique) pour un échantillon temporel à l'intérieur de la fenêtre d'analyse. Dans cet exemple, un cube comprend autant d'individus que de traces disponibles. Pour l'analyse des enregistrements diagraphiques, cette famille se présente sous la forme d'une suite de $m_j$ séries de valeurs, repérées par leur position le long du puits (temps ou profondeur). Cette suite peut être formée, par exemple, par l'ensemble des mesures diagraphiques des outils de même nature physique, comme les différents outils mesurant la porosité de la formation, ou les outils mesurant différents types de résistivité, sur un ensemble de n cotes profondeur ou temps le long d'un ou de plusieurs puits au niveau de la formation souterraine étudiée. Dans cet exemple, chaque variable $X_{j,k}$ rassemble les valeurs de l'attribut diagraphique considéré (résistivité, porosité, radioactivité, ...) pour une cote profondeur ou temps à l'intérieur de la fenêtre d'analyse. Dans cet exemple, une suite comprend autant d'individus que de cotes profondeur ou temps disponibles le long du ou des puits analysés.

Les $m_j$ variables $X_{j,k}$ d'une table $X_j$ définissent un espace dénoté $S_j$ et sont supposées centrées. Soit $D_n$ la matrice diagonale des poids des individus.

Soit $\Pi_j$ un opérateur de projection orthogonale sur l'espace $S_j$ défini par :

$$\Pi_j = X_j \left( X'_j D_n X_j \right)^{-1} X'_j D_n$$

### 2 - Calcul des nouveaux attributs

Le but de l'Analyse en Composantes Principales Généralisée (ACPG) est à la fois de décrire les proximités entre les p familles de variables et de décrire séparément chaque groupe grâce à des variables synthétiques qui sont des combinaisons linéaires des variables initiales. Alors, ce qui est commun à tous les groupes ou familles, ou à certains d'entre eux seulement, et par conséquent ce qui est différent, peut être mis en évidence. L'ACPG permet de réduire le nombre de variables utilisées pour décrire un jeu de données et permet un filtrage multivarié tout en conservant la structure multidomaines des données initiales. Afin d'atteindre ce but, la première variable synthétique calculée, que l'on nomme $Z^{(1)}$, calculée doit être telle que :

    1. les p projections orthogonales $Z_j^{(1)}$ de $Z^{(1)}$ sur les espaces $S_j$ doivent être le plus proche les unes des autres ;
    2. Dans chaque groupe j la dispersion des n individus projetés sur $Z_j^{(1)}$ est maximum.

$$1. \; \max_{Z^{(1)}} \; \sum_{j=1}^{p} R^2(Z^{(1)}, Z_j^{(1)})$$

$$2. \; \max_{\overline{Z}_j^{(1)}} \; \sum_{v=1}^{m_j} \mathrm{Cov}^2(\overline{Z}_j^{(1)}, X_{j,v})$$

Ceci se traduit mathématiquement par les conditions suivantes :
où $R^2$ est le coefficient de corrélation multiple et $Z_j^{(1)}$ est la projection de $Z^{(1)}$ sur l'espace $S_j$ normée à 1.

$$Z_j^{(1)} = \Pi_j^{(1)} Z^{(1)}$$

Ensuite, on cherche une nouvelle variable synthétique $Z^{(2)}$ selon les mêmes critères. On ajoute une condition d'orthogonalité entre les projections les variables $Z^{(k)}$ du même groupe. Le processus s'arrête quand une base orthogonale dans chaque espace $S_j$ est trouvée. Le nombre de variables $Z^{(k)}$ n'excède pas la dimension la plus grande des espaces $S_j$.

Des méthodes de rotation bien connues des gens de l'art, peuvent être mises en oeuvre dans chacun des espaces ainsi trouvés, afin d'optimiser les coefficients de corrélations entre les nouvelles variables et les variables initiales.

La première variable $Z^{(1)}$ est vecteur propre normé de la matrice de covariance $XX^tD_n$ correspondant à la plus grande valeur propre. $Z^{(1)}$ est ensuite projeté sur les p espaces $S_j$ et, dans chaque espace, la régression des $m_j$ variables par $Z_j^{(1)}$ est calculée. La matrice des p résidus juxtaposés $X_j^{(2)}$ définit le nouvel espace d'étude. Ce nouvel espace correspond à l'espace initial duquel l'influence de $Z_j^{(1)}$ a été retiré dans chaque groupe $S_j$. Les $m_j$ variables de la table $X_j^{(2)}$ définissent un sous espace $S_j^{(2)}$ de $S_j$. La seconde composante $Z^{(2)}$ est le vecteur propre normé de la matrice de covariance $X^{(2)}X^{(2)t}D_n$ des résidus correspondant à la valeur propre la plus grande. $Z^{(2)}$ est projetée sur les p espaces $S_j^{(2)}$. Et la régression des $m_j$ variables par $Z_j^{(2)}$ est calculée dans chaque espace $S_j^{(2)}$. La régression effectuée dans chaque espace $S_j$ assure que la projection de $Z^{(2)}$ sur l'espace $S_j^{(2)}$ est orthogonale à la projection de $Z^{(1)}$ sur l'espace $S_j$.

Le calcul des vecteurs propres est effectué par toute méthode connue des gens de l'art.

En pratique, la matrice $XX^tD_n$ étant d'ordre n, n pouvant être très grand, à une étape k, on calcule le vecteur propre normé $V^{(k)}$ de la matrice $X^{(k)t}D_nX^{(k)}$ associé à la plus grande valeur propre. Le vecteur $Z^{(k)}$ est ensuite simplement calculé par transformation linéaire $Z^{(k)}=X^{(k)}V^{(k)}$ et normé.

Chaque groupe peut être reconstitué avec un petit nombre d'attributs. Les variables initiales du groupe j peuvent s'exprimer comme la somme d'une combinaison linéaire des variables $Z_j^{(k)}$ et d'un résidu. Si toutes les variables $Z_j^{(k)}$ d'un groupe sont utilisées, le résidu est nul. Les coefficients de la combinaison linéaire ne sont autres que les coefficients calculés à l'issu de chaque régression dans les espaces $S_j$.

La méthode selon invention a pour propriété, entre autres, que les variables $Z^{(k)}$ sont orthogonales deux à deux.

En vue de l'interprétation des variables synthétiques calculées, on calcule ensuite pour chaque groupe j :

1. le carré de la corrélation entre la variable $Z^{(k)}$ et la variable $Z_j^{(k)}$ du groupe j, indiquant le degré de proximité entre ces deux variables;

2. le pourcentage d'inertie du groupe j expliqué par la variable $Z_j^{(k)}$.

Les corrélations entre les variables $Z^{(k)}$ et les variables initiales $X_{j,k}$ sont également calculées pour mettre en évidence d'éventuelles relations entre les $X_{j,k}$. Les corrélations entre les variables $Z_j^{(k)}$ et $X_{j,k}$ d'un même groupe j, ou les corrélations entre variables $Z_j^{(k)}$ pour un même k peuvent également être calculées.

Les nouvelles variables synthétiques ainsi créées constituent les nouveaux attributs géophysiques recherchés.

## 3 - Exemple d'application

La méthode selon l'invention a été appliquée à trois cubes de propriétés élastiques (impédance P notée Ip, impédance S notée Is et masse spécifique notée ρ) obtenus après inversion élastique jointe avant sommation à l'aide de la méthode décrite dans le brevet FR 2 800 473 déjà cité d'enregistrements sismiques regroupés en cubes à angles d'incidence commun. Chaque propriété élastique engendre un groupe de variables ou d'attributs sismiques. La fenêtre temporelle d'analyse se compose de 19 échantillons de signaux prélevés sur les enregistrements sismiques. Nous considérons comme variables les valeurs de la propriété élastique pour un échantillon temporel à l'intérieur de la fenêtre d'analyse. Chaque groupe est alors composé de 19 variables composées d'autant d'individus que de traces disponibles. Comme il y a trois groupes de variables, nous disposons au total de 57 variables. Les trois cubes de paramètres ont été préalablement horizontalisés par rapport à une surface de référence.

Les variables synthétiques $Z^{(k)}$ obtenues résument les informations respectives des trois propriétés élastiques, tout en prenant en compte les relations entre elles.

## 3.1- Analyse des relations entre les impédances P, S et la masse spécifique ρ

Le tableau 1 ci-dessous donne la proportion de variance en pourcentage expliquée par les projections des 8 premières variables synthétiques $Z^{(1)}$ à $Z^{(8)}$ dans les trois groupes. Il montre qu'il suffit de 8 variables pour résumer 87,4% de la variance de l'impédance P, 94,4% de la variance de l'impédance S et 88,4% de la variance de la masse spécifique.

| | $Z^{(1)}$ | $Z^{(2)}$ | $Z^{(3)}$ | $Z^{(4)}$ | $Z^{(5)}$ | $Z^{(6)}$ | $Z^{(7)}$ | $Z^{(8)}$ | ● |
|---|---|---|---|---|---|---|---|---|---|
| Ip | 23,4 | 24,5 | 6,3 | 13,1 | 9,8 | 3,1 | 3,8 | 3,4 | 87,4 |
| Is | 26,6 | 14,2 | 15,2 | 12,6 | 5,7 | 7,2 | 5,8 | 7,1 | 94,4 |
| ● | 16,9 | 14,1 | 13,6 | 10,2 | 8,0 | 9,4 | 10,1 | 6,1 | 88,4 |

Le tableau 2 ci-après donne le carré de la corrélation entre les variables synthétiques $Z^{(k)}$ et leurs projections sur les trois groupes. Cette valeur indique le degré de proximité entre la variable et le groupe. Plus la valeur est proche de 1, plus la variable est proche de sa projection et donc du groupe.

| | $Z^{(1)}$ | $Z^{(2)}$ | $Z^{(3)}$ | $Z^{(4)}$ | $Z^{(5)}$ | $Z^{(6)}$ | $Z^{(7)}$ | $Z^{(8)}$ |
|---|---|---|---|---|---|---|---|---|
| Ip | 0,48 | 0,79 | 0,38 | 0,72 | 0,71 | 0,24 | 0,02 | 0,30 |
| Is | 0,91 | 0,43 | 0,86 | 0,53 | 0,36 | 0,59 | 0,09 | 0,73 |
| ● | 0,78 | 0,49 | 0,77 | 0,46 | 0,65 | 0,79 | 0,96 | 0,46 |

Par exemple, $Z^{(1)}$ est très proche de Is et proche de ρ, mais très éloigné de Ip. Alors que $Z^{(2)}$ est proche de Ip, mais très éloigné de Is et de ρ. Sur les 8 premières variables $Z^{(k)}$, trois sont proches de Ip seul, deux sont proches à la fois de Is et de ρ, une est proche de Is seul, et deux sont proches de ρ seul. Ainsi, il apparaît que Ip et Is ne contiennent pas la même information et qu'une part de l'information contenue dans Is et dans ρ semble commune.

### 3.2 - Filtrage des impédances P, S et de la masse spécifique

Les trois propriétés élastiques peuvent être reconstituées avec un nombre restreint de nouveaux attributs sismiques. Le nombre de variables synthétiques utilisées pour la reconstitution peut être différent d'un groupe à l'autre : il dépend du pourcentage d'inertie que l'on désire reconstituer/filtrer.

### 3.3 - Reconnaissance des formes supervisée et non supervisée des nouveaux attributs

Il est possible d'interpréter géologiquement les nouveaux attributs sismiques au travers d'une analyse de faciès avec un algorithme de reconnaissance de forme supervisé ou non.

En reconnaissance des formes supervisée, il est nécessaire de choisir des classes d'apprentissage regroupant des événements sismiques situés aux voisinages de puits dont l'interprétation géologique a été effectuée. Cette méthodologie permet de classer l'ensemble des événements sismiques en fonction des caractères géologiques observés aux puits.

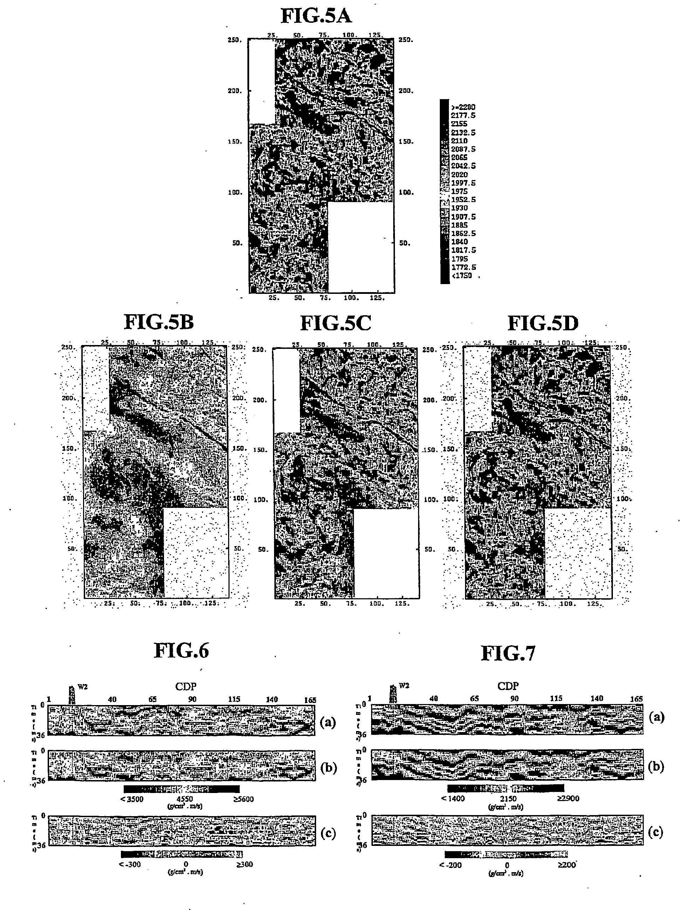

Dans notre cas, les connaissances géologiques sur les trois puits disponibles W1, W2 et W3, ainsi que les connaissances géologiques générales sur la zone d'étude nous amènent à considérer trois classes : une première classe correspondant aux puits W1 et W2 représentent des sables turbiditiques, une seconde classe correspondant au puits W3 représente des boues turbiditiques et une troisième classe représente des hémipélagites. Les puits W1 et W2 montrant des caractéristiques géologiques proches, seuls les événements sismiques situés autour du puits W2 sont utilisés, le puits W1 servant de test aveugle. La localisation du puits W3 étant incertaine, les événements sismiques utilisés pour caractériser la classe 2 sont situés autour d'un puits virtuel défini à proximité de W3. Enfin, ne disposant d'aucun puits pour la classe 3, un puits virtuel est défini à partir de nos connaissances géologiques générales. La Fig. 7 montre la localisation géographique des trois classes d'apprentissage. Chaque classe est constituée de 121 événements sismiques (11×11). Ces événements servent à calibrer une fonction de classement qui est ensuite appliquée à l'ensemble des événements sismiques.

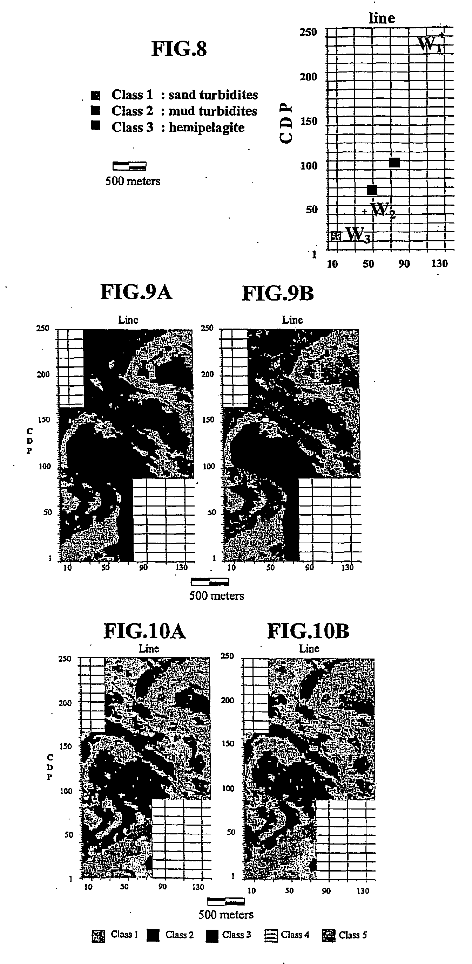

Les Fig.8A, 8B montrent respectivement les affectations obtenues et les affectations les plus probables, c'est-à-dire ayant une probabilité d'affectation supérieure ou égale à 80%. Le puits W1, utilisé en test aveugle, est correctement attribué à la même classe que le puits W2. Le puits W3 est localisé en bordure des classes 1 et 2. La classe 2 se distribue le long d'une forme chenalisante. La carte de la figure 8B montre que les résultats sont stables : peu d'événements présentent une mauvaise probabilité d'affectation.

En reconnaissance des formes non supervisée, les classes d'apprentissage sont constituées en utilisant les modes d'une fonction de densité de probabilité multivariée calculée à partir de l'ensemble des événements sismiques, dans un espace engendré par les huit premiers nouveaux attributs. Les événements sismiques de plus forte densité de probabilité constituant les pics de cette fonction de densité sont sélectionnés pour réaliser l'apprentissage de la fonction de classement. Cette fonction est ensuite appliquée à l'ensemble des événements sismiques considérés pour les affecter à l'une des classes : les Fig.9A, 9B montrent les affectations obtenues, ainsi que les affectations les plus probables, c'est-à-dire ayant une probabilité d'affectation supérieure ou égale à 80%. Les cartes obtenues sont très proches des cartes des fig. 8A, 8B. La classe 3 de l'analyse supervisée correspond aux classes 3, 4 et 5 de l'analyse non supervisée. Les puits W1 et W2 sont attribués à la même classe et le puits W3 est toujours situé à la frontière entre les classes 3, et surtout 1 et 2. Cette convergence des résultats valide l'interprétation de l'approche supervisée.

**Revendications**

1.  Méthode pour compacter et filtrer des événements géophysiques lisibles sur plusieurs jeux d'enregistrements géophysiques disponibles, obtenus par exploration d'une zone souterraine, **caractérisée en ce qu'**elle comporte :

    - la répartition de ces événements géophysiques dans un certain nombre p de familles de variables géophysiques ayant chacune une signification physique particulière ;
    - la formation par combinaison des dites variables sismiques, de variables synthétiques en nombre très inférieur au nombre des dites variables, que l'on obtient par construction d'une base vectorielle orthogonale dans chacun des p ensembles d'analyse constituées par les données de chacune des dites familles, d'où découle la formation d'une base vectorielle orthonormée décrivant les p ensembles d'analyse ; et
    - l'utilisation de cette base vectorielle orthonormée pour filtrer et décrire les dits événements géophysiques.

2.  Méthode selon la revendication 1, **caractérisé en ce que** la formation des variables synthétiques est obtenue en combinant une technique d'analyse en composantes principales ou des méthodes dérivées de diagonalisation d'une norme et une technique de régression simple.

3.  Méthode selon la revendication 1 et 2, **caractérisée en ce que** l'on soumet à une rotation les variables synthétiques pour améliorer les corrélations entre variables initiales et variables synthétiques.

4.  Méthode selon la revendication 1 ou 2 ou 3, **caractérisée en ce que** l'on forme des variables synthétiques à partir de familles constituées de cubes de traces sismiques obtenus à l'issue d'une campagne sismique 3D, chacun correspondant à un même déport ou offset.

5.  Méthode selon la revendication 1 ou 2 ou 3, **caractérisée en ce que** l'on forme des variables synthétiques à partir de familles constituées de cubes de traces sismiques obtenus à l'issue d'une campagne sismique 3D, chacun correspondant à un même angle d'incidence.

6.  Méthode selon la revendication 1 ou 2 ou 3, **caractérisée en ce que** l'on forme des variables synthétiques à partir de familles constituées de cubes d'attributs sismiques obtenus par traitement des amplitudes de traces sismiques obtenues à l'issue d'une campagne sismique 3D.

7.  Méthode selon l'une des revendications précédentes, **caractérisée en ce que** l'on forme des variables synthétiques à partir de familles constituées de cubes de traces sismiques obtenus par des explorations sismiques successives de la zone.

8.  Méthode selon l'une des revendications précédentes, **caractérisée en ce que** l'on forme des variables synthétiques à partir de familles constituées de cubes d'attributs sismiques formés par traitement des amplitudes de traces sismiques obtenues par des explorations sismiques successives de la zone.

9.  Méthode selon la revendication 1 ou 2 ou 3, **caractérisée en ce que** l'on forme des variables synthétiques à partir de familles constituées de mesures d'attributs diagraphiques de nature physique différente.

10. Méthode selon la revendication 9, **caractérisée en ce que** l'on forme des variables synthétiques à partir de familles de mesures de résistivité,

11. Méthode selon la revendication 9, **caractérisée en ce que** l'on forme des variables synthétiques à partir de familles de mesures liées à la radioactivité des terrains.

12. Méthode selon la revendication 9, **caractérisée en ce que** l'on forme des variables synthétiques à partir de familles de mesures liées à la porosité des terrains.

**Claims**

1. A method for packing and filtering geophysical events readable on several sets of available geophysical records, obtained by exploration of an underground zone, **characterized in that** it comprises :

   - distributing these geophysical events into a certain number p of families of geophysical variables having each a particular physical significance,
   - forming, by combination of said seismic variables, synthetic variables in much fewer number than the number of said variables, which are obtained by construction of an orthogonal vector base in each one of the p analysis sets consisting of the data of each one of said families, wherefrom is derived the formation of an orthonormal vector base describing the p analysis sets, and
   - using this orthonormal vector base for filtering and describing said geophysical events.

2. A method as claimed in claim 1, **characterized in that** formation of the synthetic variables is obtained by combining a principal component analysis technique or derived norm diagonalization methods and a simple regression technique.

3. A method as claimed in claim 1 and 2, **characterized in that** the synthetic variables are subjected to a rotation so as to improve correlations between initial variables and synthetic variables.

4. A method as claimed in claim 1, 2 or 3, **characterized in that** synthetic variables are formed from families consisting of seismic trace cubes obtained after a 3D seismic survey, each one corresponding to the same offset.

5. A method as claimed in claim 1, 2 or 3, **characterized in that** synthetic variables are formed from families consisting of seismic trace cubes obtained after a 3D seismic survey, each one corresponding to the same angle of incidence.

6. A method as claimed in claim 1, 2 or 3, **characterized in that** synthetic variables are formed from families consisting of seismic attribute cubes obtained by processing seismic trace amplitudes obtained after a 3D seismic survey.

7. A method as claimed in any one of the previous claims, **characterized in that** synthetic variables are formed from families consisting of seismic trace cubes obtained by successive seismic explorations in the zone.

8. A method as claimed in any one of the previous claims, **characterized in that** synthetic variables are formed from families consisting of seismic attribute cubes formed by processing seismic trace amplitudes obtained by successive seismic explorations in the zone.

9. A method as claimed in claim 1, 2 or 3, **characterized in that** synthetic variables are formed from families consisting of log attribute measurements of different physical nature.

10. A method as claimed in claim 9, **characterized in that** synthetic variables are formed from resistivity measurement families.

11. A method as claimed in claim 9, **characterized in that** synthetic variables are formed from families of measurements linked with the formation radioactivity.

12. A method as claimed in claim 9, **characterized in that** synthetic variables are formed from families of measurements linked with the formation porosity.

**Patentansprüche**

1. Verfahren zum Komprimieren und Filtern geophysikalischer Ereignisse, die aus mehreren verfügbaren geophysikalischen Datensätzen gelesen werden können, die durch Erforschung einer unterirdischen Zone erhalten werden, **dadurch gekennzeichnet, dass** das Verfahren Folgendes umfasst:

- die Aufteilung dieser geophysikalischen Ereignisse in eine bestimmte Anzahl p von Familien von geophysikalischen Variablen, die jeweils eine bestimmte physikalische Bedeutung haben;
- die Bildung der seismischen Variablen durch Kombination von synthetischen Variablen in einer viel geringeren Anzahl als der Anzahl der Variablen, die durch Erstellung einer orthogonalen Vektorbasis in jeder der p Analysemengen erzielt wird, die von den Daten jeder der Familien gebildet werden, aus denen sich die Bildung einer orthonormalen Vektorbasis ergibt, die die p Analysemengen beschreibt; und
- die Verwendung dieser orthonormalen Vektorbasis zum Filtern und Beschreiben der geophysikalischen Ereignisse.

2. Verfahren nach Anspruch 1, **dadurch gekennzeichnet, dass** die Bildung synthetischer Variablen erzielt wird, indem eine Technik zur Analyse wesentlicher Komponenten oder von abgeleiteten Verfahren zur Diagonalisierung einer Norm und eine einfache Regressionstechnik kombiniert werden.

3. Verfahren nach Anspruch 1 oder 2, **dadurch gekennzeichnet, dass** die synthetischen Variablen einer Rotation unterzogen werden, um die Korrelationen zwischen Anfangsvariablen und synthetischen Variablen zu verbessern.

4. Verfahren nach Anspruch 1 oder 2 oder 3, **dadurch gekennzeichnet, dass** synthetische Variable aus Familien gebildet werden, die aus Kuben von seismischen Spuren bestehen, die nach einer seismischen 3D-Kampagne erhalten werden, wobei jeder demselben Versatz oder Offset entspricht.

5. Verfahren nach Anspruch 1 oder 2 oder 3, **dadurch gekennzeichnet, dass** synthetische Variable aus Familien gebildet werden, die aus Kuben von seismischen Spuren bestehen, die nach einer seismischen 3D-Kampagne erhalten werden, wobei jeder demselben Einfallwinkel entspricht.

6. Verfahren nach Anspruch 1 oder 2 oder 3, **dadurch gekennzeichnet, dass** synthetische Variable aus Familien gebildet werden, die aus Kuben von seismischen Attributen bestehen, die durch Behandlung von Amplituden von seismischen Spuren erhalten werden, die nach einer seismischen 3D-Kampagne erhalten werden.

7. Verfahren nach einem der vorhergehenden Ansprüche, **dadurch gekennzeichnet, dass** synthetische Variable aus Familien gebildet werden, die aus Kuben von seismischen Spuren bestehen, die durch aufeinander folgende seismische Erforschungen der Zone erhalten werden.

8. Verfahren nach einem der vorhergehenden Ansprüche, **dadurch gekennzeichnet, dass** synthetische Variable aus Familien gebildet werden, die aus Kuben von seismischen Attributen bestehen, die durch Behandlung von Amplituden von seismischen Spuren gebildet werden, die durch aufeinander folgende seismische Erforschungen der Zone erhalten werden.

9. Verfahren nach Anspruch 1 oder 2 oder 3, **dadurch gekennzeichnet, dass** synthetische Variable aus Familien gebildet werden, die aus Messungen von Bohrlochuntersuchungsattributen unterschiedlicher physikalischer Beschaffenheit bestehen.

10. Verfahren nach Anspruch 9, **dadurch gekennzeichnet, dass** synthetische Variable aus Familien von Messungen des Widerstands gebildet werden.

11. Verfahren nach Anspruch 9, **dadurch gekennzeichnet, dass** synthetische Variable aus Familien von Messungen gebildet werden, die mit der Radioaktivität von Terrains verknüpft sind.

12. Verfahren nach Anspruch 9, **dadurch gekennzeichnet, dass** synthetische Variable aus Familien von Messungen gebildet werden, die mit der Porosität von Terrains verknüpft sind.

**FIG.1A**

X

Enregistrements
sismiques

$X_1$      ...      $X_j$      ...      $X_p$

**FIG.1B**

Lignes

CDP

15   1

Temps/Profondeur

$X_{j,k}$

k

20   $m_j$

$X_j$

**FIG.1C**

Trace 1 ... Trace n

1

k

$m_j$

Fenêtre de $m_j$
échantillons

# FIG.2A

# FIG.2B

# FIG.2C

# FIG.3A

# FIG.3B

# FIG.3C

# FIG.3D

## FIG.4A

## FIG.4B

## FIG.4C

## FIG.4D

**FIG.5A**

**FIG.5B**

**FIG.5C**

**FIG.5D**

**FIG.6**

**FIG.7**

15

## FIG.8

◧ Class 1 : sand turbidites
■ Class 2 : mud turbidites
■ Class 3 : hemipelagite

500 meters

## FIG.9A     FIG.9B

500 meters

## FIG.10A     FIG.10B

500 meters

▨ Class 1   ■ Class 2   ■ Class 3   ▤ Class 4   ▨ Class 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2800473
- EP 1096270 A
- FR 2768818 A
- US 6051651 A
- FR 0105675
- EP 671017 A
- US 5638269 A
- FR 2772138 A
- US 6345108 B


**Littérature non-brevet citée dans la description**

- **DUMAY, J. ; FOURNIER, F.** Multivariate statistical analyses applied to seismic facies recognition. *Geophysics,* 1988, vol. 53, 1151-1159
- **HAGEN, D., C.** The application of principal components analysis to seismic data sets. *Geoexpl.,* 1982, vol. 20, 93-111
- **HOTELLING, H.** Relations between two sets of variables. *Biometrika,* 1936, vol. 28, 321-377
- **FOURNIER, F. ; DERAIN, J.F.** A statistical methodology for deriving reservoir properties from seismic data. *Geophysics,* 1995, vol. 60, 1437-1450
- **HORST, P.** Relations among m sets of measures. *Psychometrika,* 1961, vol. 26 (2), 129-149
- **CAROLL, J.D.** A généralisation of canonical correlation analysis to three or more sets of variables. *Proc. 76th Conv. Amer. Psych. Ass,* 1968
- **KETTENRING, J.R.** *Canonical analysis of several sets of variables,* 1971, vol. 58 (3), 433-450
- **SAPORTA, G.** Probabilités, analyse des données et statistiques. Technip, 1990
- **CASIN, PH.** A generalization of principal component analysis to K sets of variables. *Computational Statistics & Data Analysis,* 2001, vol. 35, 417-428